# EUROPÄISCHE PATENTSCHRIFT

(11) **EP 2 521 607 B1**
(45) Veröffentlichungstag und Bekanntmachung des Hinweises auf die Patenterteilung: **27.03.2019**
(21) Anmeldenummer: 10779474.5
(22) Anmeldetag: 10.11.2010
(51) Int. Cl.: B01D 65/10, G01N 30/96, G01N 30/88

(54) **VERFAHREN ZUR QUALIFIZIERUNG EINES NICHTPARTIKULÄREN IONENAUSTAUSCHER-ADSORBERS**
METHOD FOR QUALIFYING A NON-PARTICULATE ION-EXCHANGER ADSORBER
PROCÉDÉ DE QUALIFICATION D'UN ADSORBANT ÉCHANGEUR D'IONS NON PARTICULAIRE

(30) Priorität: 08.01.2010 DE 102010004188
(43) Veröffentlichungstag der Anmeldung: 14.11.2012
(73) Patentinhaber: Sartorius Stedim Biotech GmbH, 37079 Göttingen (DE)
(72) Erfinder: DEMMER, Wolfgang, 37077 Göttingen (DE); FABER, René, 37077 Göttingen (DE); HÖRL, Hans-Heinrich, 37120 Bovenden (DE); THIEFES, Axel, 37181 Hardegsen (DE)
(86) Internationale Anmeldenummer: PCT/EP2010/006853
(87) Internationale Veröffentlichungsnummer: WO 2011/082727

(56) Entgegenhaltungen:
- US-A1- 2003 089 664
- LENDERO ET AL: "Characterization of ion exchange stationary phases via pH transition profiles", JOURNAL OF CHROMATOGRAPHY, ELSEVIER SCIENCE PUBLISHERS B.V, NL, Bd. 1185, Nr. 1, 16. Januar 2008 (2008-01-16), Seiten 59-70, XP022500693, ISSN: 0021-9673, DOI: DOI:10.1016/J.CHROMA.2008.01.023
- PODGORNIK A ET AL: "Construction of large-volume monolithic columns", ANALYTICAL CHEMISTRY 15 NOV 2000 LNKD- PUBMED:11101250, Bd. 72, Nr. 22, 15. November 2000 (2000-11-15), Seiten 5693-5699, XP002616152, ISSN: 0003-2700
- PODGORNIK A ET AL: "Noninvasive methods for characterization of large-volume monolithic chromatographic columns", CHEMICAL ENGINEERING AND TECHNOLOGY NOVEMBER 2005 WILEY-VCH VERLAG DE, Bd. 28, Nr. 11, November 2005 (2005-11), Seiten 1435-1441, XP002616153, DOI: DOI:10.1002/CEAT.200500170
- LENDERO N ET AL: "Simple method for determining the amount of ion-exchange groups on chromatographic supports", JOURNAL OF CHROMATOGRAPHY, ELSEVIER SCIENCE PUBLISHERS B.V, NL, Bd. 1065, Nr. 1, 11. Februar 2005 (2005-02-11), Seiten 29-38, XP004750088, ISSN: 0021-9673, DOI: DOI:10.1016/J.CHROMA.2004.10.072 in der Anmeldung erwähnt
- HAHN R ET AL: "Control method for integrity of continuous beds", JOURNAL OF CHROMATOGRAPHY, ELSEVIER SCIENCE PUBLISHERS B.V, NL, Bd. 908, Nr. 1-2, 26. Januar 2001 (2001-01-26), Seiten 179-184, XP004314131, ISSN: 0021-9673, DOI: DOI:10.1016/S0021-9673(00)00938-9

## Beschreibung

Die vorliegende Erfindung betrifft ein Verfahren zur Qualifizierung eines nichtpartikulären lonenaustauscher-Adsorbers.

Der vorliegenden Erfindung liegen die im Folgenden beschriebenen Begriffsbestimmungen zugrunde. Unter "adsorptiver Stofftrennung" versteht man die Abtrennung einer oder mehrerer Komponenten aus einer fluiden Phase durch selektive Adsorption dieser Komponente(n) an einer festen Phase, dem "Adsorbens" (*Plural* "Adsorbentien"). Das Feld der Erfindung betrifft die Stofftrennung in Flüssigkeiten, wobei die Flüssigkeit im Folgenden "Medium" und die Vorrichtung, in der die Adsorption ausgeführt wird, "Adsorber" genannt wird. Adsorbentien sind poröse Feststoffe, die über funktionelle Oberflächengruppen, welche "Liganden" genannt werden, mit bestimmten Komponenten von Fluiden selektiv Bindungen eingehen können. Neben den seit langem bekannten "partikulären Adsorbentien", auch Chromatographiegele genannt, haben sich weitere "nichtpartikuläre Adsorbentien" etabliert, welche auf einer gänzlich anders gearteten Matrix beruhen. Es handelt sich hierbei um sogenannte monolithische Adsorbentien aus einem dreidimensionalen porösen Festkörper oder Träger auf der Basis von mikroporösen Membranen aus diversen Polymeren. Als Adsorptionsmembranen werden flächige Adsorbentien mit von der einen Seite zur anderen durchgehenden Poren bezeichnet. Zielsubstanz(en) und/oder Kontaminant(en) werden erfindungsgemäß als "Adsorbend" bezeichnet und im Singular gebraucht, wobei es sich aber auch um mehrere unterschiedliche Substanzen handeln kann. Unter der "Kapazität" eines Adsorbens versteht man ein quantitatives Maß für sein Aufnahmevermögen für Adsorbend. Die Kapazität wird auf eine festgelegte Menge Adsorbens bezogen.

Die vorliegende Erfindung befasst sich mit nichtpartikulären lonenaustauscher-Adsorbern. Im Weiteren werden einige Beispiele genannt. Im Stand der Technik sind unterschiedliche nichtpartikuläre Anionen- und Kationenaustauscher bekannt. Als Beispiele werden starke Anionenaustauscher auf Basis von Adsorptionsmembranen wie Sartobind® Q der Fa. Sartorius Stedim Biotech GmbH, Mustang® Q der Fa. Pall Corp., Q Membran der Fa. Natrix Separations oder Monolithen, wie CIM® QA der Fa. BIA Separations, genannt. Weitere Beispiele sind schwache Anionenaustauscher wie Sartobind® D der Fa. Sartorius Stedim Biotech GmbH, Chromasorb® der Fa. Millipore oder CIM® EDA der Fa. BIA Separations. Des Weiteren sind negativ geladene Adsorptionsmembranen, wie der starke Kationenaustauscher Sartobind® S oder der schwache Kationenaustauscher Sartobind® C der Fa. Sartorius Stedim Biotech GmbH, starke Kationenaustauscher-Membranen Mustang® S der Fa. Pall Corp., S Membran der Fa. Natrix Separations oder starke Kationenaustauscher auf Basis von Monolithen, wie z.B. CIM® SO3, oder schwache Kationenaustauscher auf Basis von Monolithen, wie z.B. CIM® CM der Fa. BIA Separations, im Stand der Technik bekannt.

Unter der Kapazität eines Ionenaustauschers versteht man ein quantitatives Maß für sein Aufnahmevermögen für austauschfähige Gegenionen. Es muss unterschieden werden zwischen der Gesamtkapazität und der nutzbaren Kapazität. Während die Gesamtkapazität die Gesamtmenge an austauschbaren Gegenionen angibt, bezieht sich die nutzbare Kapazität nur auf denjenigen Bruchteil, der unter den jeweiligen Betriebsbedingungen (z.B. pH-Wert der Lösung, Konzentration der Lösung, Art der Gegenionen) ausgenutzt werden kann. Adsorbend können Einzelmoleküle, Assoziate oder Partikel sein, bei denen es sich vorzugsweise um Proteine oder andere Substanzen biologischen Ursprungs handelt. Zielsubstanzen können beispielsweise rekombinante Proteine, wie z.B. monoklonale Antikörper sein. Kontaminanten können beispielsweise Viren, Proteine, Aminosäuren, Nukleinsäuren, Endotoxine, Proteinaggregate, Liganden oder deren Teile sein. Die Entfernung von Kontaminanten, deren Abwesenheit aus technischen, regulatorischen oder sonstigen Gründen erforderlich oder wünschenswert ist, wird als "negative Adsorption" bezeichnet.

Die meisten Anwendungen der Kontaminantenentfernung werden z. Zt. mit konventionellen Chromatographiegelen betrieben. Diese sind partikulär geformt und werden in Form von Schüttungen in Säulen betrieben. Nach Befüllen der Säule mit dem Medium schließt sich eine Prüfung auf Funktion und Integrität an. Dazu werden durch geeignete Lösungen von nicht-bindenden Molekülen wie Aceton oder Kochsalz die theoretische Bodenzahl/HETP und die Asymmetrie der Säulenfüllung bestimmt. Anhand von Grenzmustern kann dann auf die Güte der Säulenfüllung und Eignung für den Chromatographieschritt geschlossen werden. Die Chromatographiesäulen werden deutlich überdimensioniert, um ausreichende Flussraten zu erzielen. Die Säulen werden wiederverwendet, was einen erheblichen Reinigungs- und Validierungsaufwand bedeutet.

Die Ausführung chromatographischer Trennungen mit Hilfe von Adsorptionsmembranen wird auch Membranchromatographie genannt. Die Bezeichnung Adsorptionsmembran ist als Oberbegriff für verschiedene Arten von Adsorptionsmembranen wie Ionenaustauschermembranen, Affinitätsmembranen, hydrophobe Membranen oder aktivierte Membranen zu verstehen. Da Filtrationseffekte mit den adsorptiven Membranen eher unerwünscht sind, liegen die Porengrößen der im Industriemaßstab verwendeten adsorptiven Membranen meistens im Bereich von >0,4 µm. Adsorptionsmembranen bieten im Unterschied zu partikulären Adsorbentien die Möglichkeit, durch Anlegung einer hydraulischen Druckdifferenz zwischen den beiden Seiten ihrer Fläche eine Durchströmung mit dem Medium zu erzwingen, wodurch anstelle eines rein diffusiven Transportes des Adsorbenden in Richtung eines Konzentrationsgradienten ins Innere des Adsorbens ein konvektiver Stofftransport erreicht wird, der bei hohem Durchfluss sehr viel rascher erfolgen kann. Dadurch kann ein den partikulären Adsorbentien inhärenter Nachteil, der als "Diffusionslimitierung" bezeichnet wird, vermieden werden, der darin besteht, dass mit zunehmender Partikelgröße des Adsorbenden und zunehmender Molmasse des Adsorbenden die erforderliche Zeit zur Einstellung des Adsorptionsgleichgewichts erheblich zunimmt, was sich in einer Verschlechterung der Kinetik auswirkt. Aufgrund der beschriebenen Vorteile von Adsorptionsmembranen werden diese bevorzugt in Prozessen eingesetzt, in denen der Adsorbend im Medium in sehr geringer Konzentration in Relation zur Kapazität der Matrix vorliegt, so dass bezogen auf die Flächeneinheit des Adsorbens bis zur Erschöpfung der Kapazität ein großes Volumen des Mediums verarbeitet werden kann.

Typische Anwendungen sind im Bereich der negativen Adsorption z. B. die Entfernung von Kontaminanten wie DNS, Viren, Wirtszellproteinen ("Host-Cell Proteins" (HCP), CHOP (Chinese Hamster Ovary Proteins) und/oder Endotoxinen aus antikörperhaltigen Lösungen mit positiv geladenen Adsorptionsmembranen. Diese kann (darf) irreversibel verlaufen, wenn das Adsorbens nur einmal verwendet werden soll. Der Durchbruch von Kontaminanten ist ein kritischer Faktor in validierten biopharmazeutischen Prozessen. Die Wirtszellproteine stellen ein breites Spektrum an unterschiedlichen Zellproteinen mit unterschiedlichen isoelektrischen Punkten (pl) und unterschiedlicher Größe und Affinität zum Adsorbens dar. Die Konzentration und Zusammensetzung der Kontaminanten hängen vom Expressionssystem und von den vorgeschalteten Aufreinigungsschritten ab. Typische Konzentrationen von Wirtszellproteinen in einem Protein-A-Pool liegen im Bereich von 500-5000 ppm (ng/mg Antikörper) und nach einem weiteren CEX-Schritt (Kationenaustauscher-Schritt) im Bereich von 50-500 ppm. Die Virusabreicherung wird in LRV ("logarithmic reduction value") angegeben. Sie entspricht dem negativen dekadischen Logarithmus des Verhältnisses der Viruskonzentration im Ausgangsmedium zur Viruskonzentration im Filtrat. LRV von 5 bedeutet daher, dass 99,999% der Viren durch den Adsorber entfernt wurden. Ähnlich wird auch die Abreicherung von Endotoxinen in LRV angegeben.

Die Anwendung von Adsorptionsmembranen erfolgt im Allgemeinen in Modulen/Capsulen, die auch als "Membranadsorber" bezeichnet werden. Sie bestehen aus einem Gehäuse, in dem meist eine oder bevorzugt mehrere Lagen einer Adsorptionsmembran eingebaut sind. Die Adsorptionsmembran ist in dem Gehäuse so abgedichtet, dass der Durchfluss durch die Membranlagen zwingend ist. Die Bauformen ähneln denen in der Membranfiltration üblichen Modulen (z. B. Wickelmodul, Stapelmodul etc.). Der Adsorber wird in der Regel anschlussfertig geliefert, wodurch das Packen des Adsorbers beim Anwender entfällt. Die Auslegung und die Form von Adsorbern werden an die im Vergleich zu den partikulären Chromatographiesäulen schnelle Betriebsweise angepasst. Das Verhältnis Höhe des Adsorptionsmembranstapels zu Anströmfläche ist im Falle von Membranadsorbern um Größenordnungen kleiner als bei Chromatographiesäulen. Die benötigten Mengen an Adsorptionsmembranen liegen in der Regel deutlich unter denen von Chromatographiegelen. Dadurch ist auch der Einfluss der Totvolumina und der Adsorberperipherie (Schläuche, Leitungen, Anschlüsse, Detektoren) größer als bei konventionellen Chromatographiesäulen. Die für die Chromatographie verwendeten Qualifizierungsmethoden wie die Bestimmung der Bodenzahl/HETP oder der Asymmetrie der Säulenpackung sind daher eher unempfindlich und nur sehr begrenzt für Membranadsorber anwendbar.

Folgende Kriterien sollen bei der Qualifizierung eines im Prozess installierten Adsorbers erfüllt und dokumentiert werden, damit ein applikationsgerechter Betrieb gewährleistet wird und die regulatorischen Anforderungen erfüllt werden:
A. Sind die richtigen funktionellen Gruppen vorhanden?
B. Ist eine ausreichende Menge an funktionellen Gruppen vorhanden?
C. Wird eine ausreichende Menge an funktionellen Gruppen beim Betrieb des Adsorbers erreicht?
D. Ist die Membranstruktur, der Membranstapel und die Anbindung der Membran an das Gehäuse fehlerfrei?

Sind alle diese vier Kriterien für einen Adsorber erfüllt, ist erfindungsgemäß die Integrität dieses Adsorbers gegeben.

Im Mittelpunkt der Validierung von Membranadsorber-Systemen durch den Hersteller stehen Messungen von unterschiedlichen Parametern, wie z.B. Durchfluss, Bindekapazität für Modellmoleküle, Ligandendichte, mechanische Stabilität, chemische Kompatibilität und extrahierbare Substanzen. Analog zu den Säulen sind auch bei den Membranadsorbern die entsprechenden Nachweise zur Funktionalität und Integrität zu führen.

Eine der verwendeten Methoden ist ein Integritätstest mit Hilfe eines Testgerätes, welches für sterilfiltrierende Flachfilter und Filterkerzen entwickelt wurde. Ein kommerziell erhältliches Gerät ist z.B. der Sartocheck® 4 der Fa. Sartorius-Stedim Biotech GmbH. Dabei wird die Luftdiffusion durch einen mit Wasser benetzten Membranstapel bestimmt und mit einem integren Referenzmembranstapel verglichen. Ist die Diffusion oberhalb eines vorab bestimmten Referenzwertes, so liegt ein Defekt im Membranstapel vor. Diese Methode liefert jedoch nur eine Aussage über den oben aufgeführten Punkt D und ist damit nur begrenzt aussagefähig.

Für Ionenaustauscher gibt eine pH-Titrationskurve (pH-Wert der Lösung als Funktion der zugesetzten Menge Lauge bzw. Säure) Auskunft über die Anzahl und den pK-Wert der aktiven Gruppen. Bei einer direkten pH-Titration titriert man eine definierte Menge Ionenaustauscher mit oder ohne Salzzusatz direkt mit eingestellter Lauge oder Säure und misst nach jeder Zugabe den pH-Wert der Lösung. Nach jedem Zusatz von Lauge oder Säure muss die Einstellung des Gleichgewichts zwischen Ionenaustauscher und Lösung abgewartet werden. Dies kann einige Stunden bis Wochen dauern. In Journal of Chromatography A, 1065 (2005) 29-38 wird eine Methode zur Bestimmung der Menge an Ionenaustauscher-Gruppen an einem Chromatographieträger beschrieben. Nach einer Sättigung des Adsorbens mit einer konzentrierten Pufferlösung wird eine niedrig konzentrierte Pufferlösung bei gleichem pH-Wert durch das Adsorbens geleitet. Es konnte gezeigt werden, dass die pH-Änderung mit der Zeit ein Maß für die Anzahl der geladenen Gruppen des Adsorbens ist. Die pH-Änderung liegt jedoch im Bereich von max. einer pH-Stufe und daher ist dieses Verfahren unempfindlich für den Nachweis von Fehlstellen in Membranadsorbern im Rahmen einer Qualifizierung.

LENDERO ET AL: "Characterization of ion exchange stationary phases via pH transition profiles", JOURNAL OF CHROMATOGRAPHY, ELSEVIER SCIENCE PUBLISHERS B.V., NL, Bd. 1185, Nr. 1, 16. Januar 2008 (2008-01-16), Seiten 59-70 beschreibt ein Verfahren zur Ermittlung a) der Kapazität von Chromatographievorrichtungen mit Ionenaustauschern und b) des Vorliegens von Kationen- oder Anionenaustauschern oder von schwachen oder starken Ionenaustauschern. Dazu werden die Ionenaustauscher (Gele, Monolithe, mikroporöse Membranen) stufenweise mit Pufferlösungen gleichen pH-Wertes aber unterschiedlicher lonenstärke beaufschlagt, und im Eluat der durchbrechenden Pufferlösung wird der pH-Wert gemessen. Der Kurvenverlauf soll Aufschluß über den lonenaustauschertyp geben.

PODGORNIK ET AL: "Construction of large-volume monolithic columns", ANALYTIC CHEMISTRY 15 NOV 2000 LNKD-PUBMED: 11101250, Bd. 72, Nr. 22, 15. November 2000 (2000-11-15), Seiten 5693-5699 beschreibt die Konstruktion einer großvolumigen monolithischen Chromatographiesäule, die aus mehreren monolithischen Hülsen besteht, welche aus Monomeren durch Polymerisation hergestellt werden. Zur Einführung von zum Beispiel der schwachen Anionenaustauschergruppe Diethylaminoethyl (DEAE) wird der polymerisierte Monolith mit Diethylamin behandelt. Nach dieser Modifizierung wird der Monolith zur Entfernung von nicht umgesetztem Diethylamin mit deionisiertem Wasserr gewaschen.

Das Dokument PODGORNIK ET AL: "Noninvasive methods for characterization of large-volume monolithic chromatographic columns", CHEMICAL ENGINEERING AND TECHNOLOGY" NOVEMBER 2005 WILEY-VCH VERLAG DE, Bd. 28, Nr. 11, November 2005 (2005-11), Seiten 1435-1441 betrifft eine nichtinvasive Methode zur Charakterisierung einer großvolumigen monolithischen Chromatographie-Säule hinsichtlich der Porengrößenverteilung, der spezifischen Oberfläche, der Gleichmäßigkeit des Monolithen, des Typs und der Dichte der aktiven Gruppen. Dabei wurde eine lineare Proportionalität zwischen pH-Wertänderungen und der Menge an aktiven Gruppen im Monolithen gezeigt.

In einem Verfahren (US Patent 7,281,410 B2, Oct. 16, 2007, Phillips, *"Method für determining an effective Peclet number for a membrane device"* und US Patent Application Publication US 2003/0089664 A1, May 15, 2003, Phillips, *"Membrane Adsorber Device"*) erfolgt die Bestimmung der Peclet-Zahl eines Membranadsorbers durch die Schritte a) Equilibrieren des Membranadsorbers mit einem Equilibrierungspuffer, b) Beladen des Membranadsorbers mit einer bekannten Konzentration eines spezifischen Adsorbenden in einem Equilibrierungspuffer, c) Detektion des Durchbruchs des Adsorbenden als Funktion von Zeit, Beladungsvolumen und anderen geeigneten Variablen, die mit der Menge des beladenen Adsorbenden zusammenhängt, d) Analysieren der Durchbruchkurve, um die entsprechende Flusscharakteristik des Membranadsorbers durch Berechnung der Schärfe der Durchbruchskurve zu bestimmen, e) Vergleichen der Ergebnisse vom Schritt d) mit einem bekannten integren Membranadsorber, um die effektive Peclet-Zahl zu bestimmen. Als Adsorbend wird z.B. Tosylglutaminsäure verwendet, deren Durchbruch durch Detektion der UV-Absorption detektiert wird.

Ein weiteres Verfahren (US Patent Application Publication US 2008/0299672 A1, Dec. 4, 2008, Nochumson et al., *"System and method for testing chromatography media and devices*") beschreibt eine Methode zur Bestimmung der Integrität einer Chromatographiemembran eingeschweißt in einem Gehäuse, bei dem die Membran pulsartig mit einem Adsorbenden, wie z.B. Adenosinmonophosphat (AMP), unter Standardbedingungen beaufschlagt wird, anschließend das gebundene AMP mittels Pufferlösung eluiert wird und die Konzentration des AMP im Eluat zeitabhängig mittels UV-Absorption bei 260 nm gemessen wird. Die so erhaltene Extinktionskoeffizient-Zeit-Kurve wird verglichen mit der Extinktionskoeffizient-Zeit-Kurve eines integren Referenzmoduls. Beim Auftreten eines Defekts (Loch) tritt im Gegensatz zum integren Referenzmodul eine vorzeitige UV-Absorption auf.

Beide im Stand der Technik bekannten Verfahren verwenden "prozessfremdes" organisches Adsorbend, welches an dem Adsorbens zuerst in einem geeigneten Puffer adsorbiert wird. In dem Verfahren nach US 2008/0299672 A1 muss das Adsorbend vom Adsorbens eluiert werden. Dies stellt einen großen und entscheidenden Nachteil dar, da immer nachgewiesen werden muss, dass das Adsorbend vollständig aus dem Adsorbens und aus dem Prozessmedium bzw. Produkt entfernt wurde. Gegebenenfalls muss das Adsorbend in einem nachgeschalteten Prozessschritt entfernt werden. Dies stellt aus regulatorischen, ökonomischen und prozesssicherheitstechnischen Gründen eine signifikante Limitierung dar. Weiterhin zeigen die Methoden eine relativ geringe Empfindlichkeit der Detektion durch UV-Absorption und weisen damit eine relativ geringe Genauigkeit auf.

Der vorliegenden Erfindung liegt die Aufgabe zugrunde, eine Qualifizierungsmethode für nichtpartikuläre lonenaustauscher-Adsorber bereit zu stellen, welche Fehlstellen oder Defekte mit einfachen Mitteln robust, nicht-destruktiv und mit sehr hoher Empfindlichkeit detektiert. Vorzugsweise sollen für die Qualifizierung Hilfsmittel (z.B. Messinstrumente, Testlösungen) verwendet werden, die keine Beeinträchtigung der Funktion des Adsorbers oder der Produktqualität bedeuten oder keine zusätzlichen Prozessschritte bzw. Chemikalien erfordern."

Diese Aufgabe wird durch die Bereitstellung eines Verfahrens zur Qualifizierung eines nichtpartikulären lonenaustauscher-Adsorbers nach Anspruch 1 gelöst.

Die vorliegende Erfindung sowie weitere sich daraus ergebende Vorteile werden in der nachfolgenden Beschreibung unter Bezugnahme auf die in den Beispielen beschriebenen Ausführungsformen näher erläutert.

Beispielsweise für den Fall eines nichtpartikulären, starken Anionenaustauscher-Adsorbers mit quaternären Ammonium-Liganden wird gemäß einem Ausführungsbeispiel zuerst 1 mol/l NaOH Lösung im Überschuss durch den Anionenaustauscher geleitet. Dabei wird der Anionenaustauscher mit OH⁻-Ionen beladen. Der Anionenaustauscher wird nun kurz mit Wasser gewaschen, um die freie Lauge aus dem Anionenaustauscher zu verdrängen, bis der Ablauf eine niedrige Leitfähigkeit aufweist. Beim Durchleiten von Säure (z.B. 10 mmol/l HCl) läuft der lonenaustausch ab. Die freigesetzten OH⁻-Ionen kombinieren mit den H⁺-Ionen der Säure zu Wasser. Die Cl⁻-Ionen werden praktisch vollständig vom Anionenaustauscher aufgenommen, solange dieser noch OH⁻-Ionen enthält. Gleichzeitig bleiben die Leitfähigkeit und der pH-Wert im Ablauf zunächst nahezu unverändert, da bis zum Durchbruch der Säure praktisch alle H⁺-Ionen durch freigesetzte OH⁻-Ionen neutralisiert werden. Sobald der Anionenaustauscher alle OH⁻-Ionen abgegeben hat, sinkt der pH-Wert im Ablauf steil ab. Aus dem Verbrauch der Säure kann die nutzbare Kapazität oder Durchbruchskapazität des Anionenaustauschers berechnet werden.

Des Weiteren wird beispielsweise für den Fall eines nichtpartikulären, schwachen Anionenaustauscher-Adsorbers mit z. B. Polyallylamin-Liganden gemäß einem Ausführungsbeispiel zuerst 1 mol/l NaOH Lösung im Überschuss durch den Anionenaustauscher geleitet. Dabei wird der Anionenaustauscher in freie NH₂-Aminogruppen überführt. Der Anionenaustauscher wird nun kurz mit Wasser gewaschen, um die freie Lauge aus dem Adsorber zu verdrängen, bis der Ablauf eine niedrige Leitfähigkeit aufweist. Beim Durchleiten von Säure (z.B. 10 mmol/l HCl) werden die NH₂-Gruppen mit den H⁺-Ionen der Säure in NH₃⁺-Gruppen überführt. Gleichzeitig werden die Cl⁻-Ionen praktisch vollständig von Anionenaustauschers aufgenommen. Die Leitfähigkeit und der pH-Wert im Ablauf bleiben zunächst nahezu unverändert, da bis zum Durchbruch der Säure praktisch alle H⁺-Ionen durch freie NH₂-Gruppen gebunden werden. Sobald alle NH₂-Gruppen des Anionenaustauschers mit H⁺-Ionen gesättigt sind, sinkt der pH-Wert im Ablauf steil ab. Aus dem Verbrauch der Säure kann die nutzbare Kapazität oder Durchbruchskapazität des Anionenaustauschers berechnet werden.

Darüber hinaus wird beispielsweise für den Fall eines nichtpartikulären, starken Kationenaustauscher-Adsorbers mit Sulfonsäure-Liganden gemäß einem Ausführungsbeispiel zuerst 1 mol/l HCl Lösung im Überschuss durch den Kationenaustauscher geleitet. Dabei wird der Kationenaustauscher mit H⁺-Ionen beladen. Der Kationenaustauscher wird nun kurz mit Wasser gewaschen, um die freie Säure aus dem Adsorber zu verdrängen, bis der Ablauf eine niedrige Leitfähigkeit aufweist. Beim Durchleiten von Lauge (z.B. 10 mmol/l NaOH) läuft der lonenaustausch ab. Die freigesetzten H⁺-Ionen kombinieren mit den OH⁻-Ionen der Lauge zu Wasser. Die Na⁺-Ionen werden praktisch vollständig vom Kationenaustauscher aufgenommen, solange dieser noch H⁺-Ionen enthält. Gleichzeitig bleiben die Leitfähigkeit und der pH-Wert im Ablauf zunächst nahezu unverändert, da bis zum Durchbruch der Lauge praktisch alle OH⁻-Ionen durch freigesetzte H⁺-Ionen neutralisiert werden. Sobald der Kationenaustauscher alle H⁺-Ionen abgegeben hat, steigt der pH-Wert im Ablauf steil an. Aus dem Verbrauch der Lauge kann die nutzbare Kapazität oder Durchbruchskapazität des Kationenaustauschers berechnet werden.

Gemäß einem Ausführungsbeispiel kann, wenn das flüssige, Ionen enthaltende Medium als Lauge vorliegt, Natronlauge oder Kalilauge verwendet werden. Demgegenüber kann, wenn das flüssige, Ionen enthaltende Medium als Säure vorliegt, in einem Ausführungsbeispiel, Salzsäure, Schwefelsäure oder Essigsäure verwendet werden. Die Konzentrationen können je nach der Ionenaustauschkapazität des Adsorbers gewählt werden. Konzentrationen von < 1 mol/l, bevorzugt < 0,5 mol/l und besonders bevorzugt von < 0,1 mol/l können verwendet werden.

Gemäß einem Ausführungsbeispiel ist die ionensensitive Sonde zur Detektion der Konzentration der durchgebrochenen Ionen bevorzugt eine pH-Elektrode, ein ionensensitiver Feldeffekt-Transistor oder ein pH-Indikatorfarbstoff. Dabei kann die Ermittlung der lonenkonzentration beispielsweise mittels einer entsprechenden Durchflusszelle mit unterschiedlichen simultan messenden Sensoren und den entsprechenden elektronischen Schaltungsmodulen erfolgen. Die Detektion kann direkt an/in dem Adsorber durch Einbau entsprechender, dem Fachmann bekannter ionensensitiver Sonden ermittelt werden. Im Falle von Wasserstoffionen oder Hydroxidionen werden als Beispiele für derartige Sonden aufgeführt:
- potentiometrische Indikatorelektroden, wie z.B. Glaselektroden,
- ionensensitive Feldeffekt-Transistoren oder
- pH-Indikatorfarbstoffe.

Weitere Beispiele ionensensitiver Sonden zum Nachweis anorganischer Ionen werden in Tabelle 1 aufgeführt.

**Tab. 1: Beispiele ionensensitiver Elektroden und nachzuweisende Ionen**

| Hersteller | Ionen | Empfindlichkeit in mol/l |
|---|---|---|
| Endress & Hauser | NH₄⁺ | k.A. |
| | NO₃⁻ | k.A. |
| Mettler Toledo | Na⁺ | 10⁻⁷ |
| | Cl⁻ | 10⁻⁵ |
| | K⁺ | 10⁻⁶ |
| | Ca²⁺ | 10⁻⁶ |
| | NO₃⁻ | 10⁻⁵ |
| Metrohm | Na⁺ | 10⁻⁶ |
| | Cl⁻ | 5 x 10⁻⁷ |
| | K⁺ | 10⁻⁶ |
| | Ca²⁺ | 5 x 10⁻⁷ |
| | NH₄⁺ | 0,1 - 17000 ppm |

Gemäß einem Ausführungsbeispiel können z.B. Einwegsensoren verwendet werden, die nach dem Einsatz des Adsorbers zusammen mit diesem entsorgt werden können.

Bei einer Beschädigung und/oder eines Fehlers in der Herstellung eines nichtpartikulären lonenaustauscher-Adsorbers verschiebt sich die Änderung der lonenkonzentration im Durchlauf und dessen Charakteristik dergestalt, dass diese früher erfolgt, da die Rückhaltefähigkeit des Adsorbers beeinträchtigt ist. Überraschender- und vorteilhafterweise kann gemäß der vorliegenden Erfindung aufgrund der Empfindlichkeit des Verfahrens auch bei nur geringer Beeinträchtigung des Adsorbers diese detektiert werden. Dies gelang bisher mit der UV-Absorption nicht, obwohl ein entsprechender unentdeckter Mangel trotzdem eine Verschlechterung z. B. in der Virenrückhaltung zur Folge hatte und somit die Leistungsfähigkeit des Formkörpers unentdeckt möglicherweise für eine entsprechende Anwendung ungenügend war.

Vorteilhafterweise lassen sich gemäß dem Verfahren der vorliegenden Erfindung auf einfache und kontinuierliche Weise sehr kleine Fehlstellen und Defekte detektieren. Damit einhergehend lässt sich vorteilhafterweise mit diesem Verfahren die Rückhaltefähigkeit für Kontaminanten, wie z.B. Viren, DNS, Wirtzellproteinen und Endotoxinen prüfen.

Nach der Qualifizierung des Adsorbers folgt erfindungsgemäß direkt die Equilibrierung für den entsprechenden Prozessschritt. Vorteilhafterweise kann das erfindungsgemäße Verfahren vor ("pre-use") und/oder nach ("post-use") der Verwendung des Adsorbers durchgeführt werden. Weiterhin lassen sich einige Prozessschritte, wie z.B. Sanitisierung des Adsorbers mit Lauge in die erfindungsgemäße Qualifizierungsmethode integrieren, indem z.B. bei einem Anionenaustauscher der erste Schritt unter Sanitisierungsbedingungen mit 1 mol/l NaOH für die Dauer von 30 min durchgeführt wird. Ähnlich lässt sich der Regenerierungsschritt nach der Verwendung des Adsorbers z.B. mit 1 mol/l NaOH bei erhöhter Temperatur in das erfindungsgemäße Verfahren integrieren.

Die Figuren 1 bis 4 zeigen Durchbruchskurven, die nachfolgend in den Beispielen 1 bis 4 näher erläutert werden.
Dabei zeigt Figur 1 Durchbruchskurven an einem starken Anionenaustauscher-Membranadsorberstapel (3-lagig) mit quaternären Ammonium-Liganden ohne und mit künstlichen Fehlstellen, Lochgrößen 440 µm und 600 µm.
Figur 2 zeigt Durchbruchskurven an einem schwachen Anionenaustauscher-Membranadsorberstapel (3-lagig) mit Polyallylamin-Liganden ohne und mit künstlicher Fehlstelle (Lochgröße: 450 µm) bei der Beaufschlagung mit Schwefelsäure.
Figur 3 zeigt Durchbruchskurven an einem schwachen Anionenaustauscher-Membranadsorberstapel (3-lagig) mit Polyallylamin-Liganden ohne und mit künstlicher Fehlstelle (Lochgröße: 450µm) bei der Beaufschlagung mit Salzsäure.
Figur 4 zeigt Durchbruchskurven an einem starken Kationenaustauscher-Adsorberstapel (3-lagig) mit Sulfonsäure-Liganden ohne und mit künstlicher Fehlstellen (Lochgröße: 450 µm) bei der Beaufschlagung mit Natronlauge.

Die vorliegende Erfindung sowie weitere sich daraus ergebende Vorteile werden in der nachfolgenden Beschreibung unter Bezugnahme auf die in den Beispielen beschriebenen Ausführungsformen näher erläutert.

### Beispiele

### Beispiel 1: Durchbruchskurven an einem starken Anionenaustauscher-Adsorber mit quaternären Ammonium-Liganden ohne und mit verschiedenen Defekten

Es wurde eine kommerziell erhältliche Membran des Typs Sartobind® Q, starker Anionenaustauscher, Bestell-Nr. 94IEXQ42-001, der Fa. Sartorius Stedim Biotech GmbH verwendet. Drei Membran-Ronden mit einem Durchmesser von 3 cm wurden aus einem Flachmembranbogen gestanzt, zu einem 3-lagigen Stapel gelegt, in ein entsprechendes Gehäuse in eine Einspannvorrichtung gebracht und mit geeigneten Adaptern an eine Chromatographie - Anlage, Typ ÄKTA Prime plus der Fa. General Electric Healthcare angeschlossen. Die Membranfläche beträgt insgesamt 15 cm², die Anströmfläche 5 cm². Die Anlage wurde nach den Vorgaben des Herstellers betrieben. Alle Schritte wurden bei einer Flussrate von 10 ml/min durchgeführt. Zur Simulation verschiedener Defekte in diesem Membranstapel wurden vor dem Einbau mittels Injektionsnadeln mit plan geschliffenen Spitzen Löcher mit den Durchmessern 450 µm bzw. 600 µm in den trockenen Membranstapel gestanzt. Aufgrund der flexiblen Membranmatrix sind die Defekte in ihrer Größe und Form nicht streng definiert. Folgende Schritte wurden durchgeführt:
1. Spülen des Adsorbers mit 10 ml einer Lösung von 1 mol/l NaOH in Wasser.
2. Waschen des Adsorbers mit 40 ml Reinstwasser aus Anlage Typ Arium® der Fa. Sartorius-Stedim Biotech GmbH.
3. Beaufschlagung des Adsorbers mit einer 2 mmol/l H₂SO₄-Lösung.
4. Aufzeichnen des geförderten Volumens und des pH-Wertes im Ablauf mit Hilfe einer Durchflusszelle für den pH-Wert.

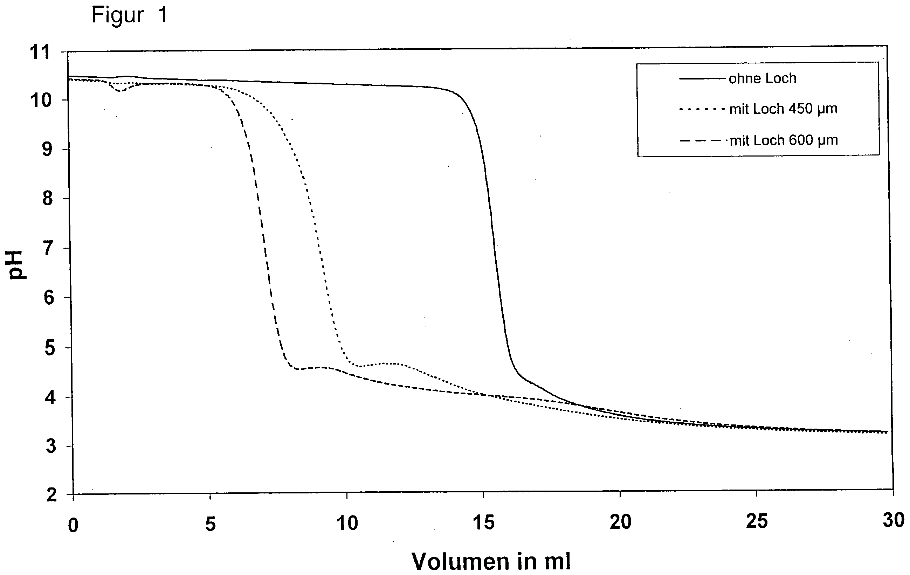

Fig. 1 zeigt Durchbruchskurven 3-lagiger lonenaustauscher-Membranadsorberstapel mit quaternären Ammonium-Liganden, in denen künstliche Defekte (Löcher) eingebracht wurden, im Vergleich zu einem intakten Stapel bei der Beaufschlagung mit Schwefelsäure. Es zeigt sich ein deutlich früherer Durchbruch für die Membranstapel mit Loch gegenüber dem intakten Membranstapel. Auch lässt sich eine Differenzierung der verschiedenen Lochgrößen erkennen.

### Beispiel 2: Durchbruchskurven an nichtpartikulären, schwachen Anionenaustauscher-Adsorbern mit Polyallylamin-Liganden bei der Beaufschlagung mit Schwefelsäure

Es wurde eine, wie in WO2009/127285 A1 (Beispiel 21) beschrieben hergestellte, mit Polyallylamin modifizierte Membran wie in Beispiel 1 dieser Anmeldung beschrieben in ein Gehäuse eingebaut und verwendet. Folgende Schritte wurden durchgeführt:
1. Spülen des Adsorbers mit 10 ml einer Lösung von 1 mol/l NaOH in Wasser.
2. Waschen des Adsorbers mit 40 ml Reinstwasser.
3. Beaufschlagung des Adsorbers mit einer 10 mol/l H₂SO₄ Lösung.
4. Aufzeichnen des geförderten Volumens und des pH-Wertes im Ablauf mit Hilfe einer Durchflusszelle für den pH-Wert.

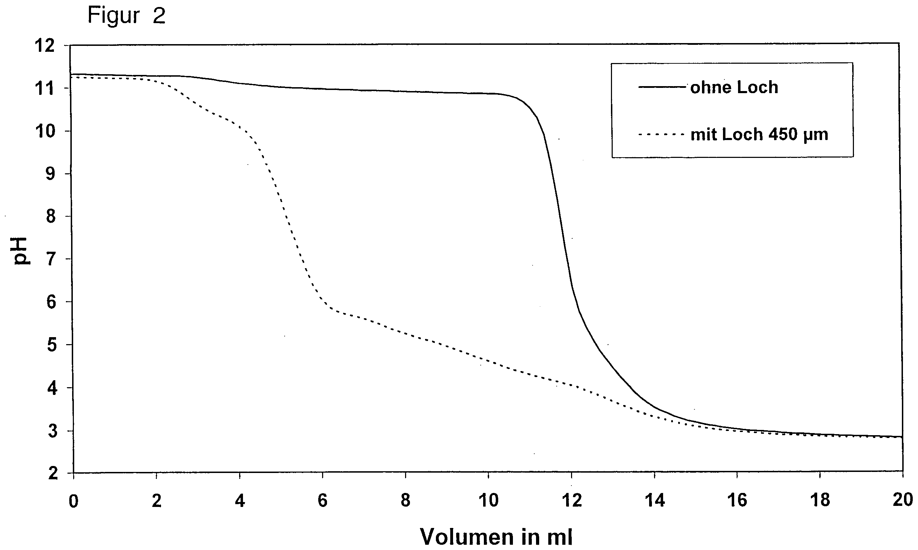

Fig. 2 zeigt die Durchbruchskurve an einem 3-lagigen schwachen lonenaustauscher-Adsorberstapel mit Polyallylamin-Liganden, in dem ein künstlicher Defekt (Loch) eingebracht wurde, im Vergleich zu einem intakten Stapel bei der Beaufschlagung mit Schwefelsäure. Es zeigt sich ein deutlich früherer Durchbruch für den Membranstapel mit Loch gegenüber dem intakten Membranstapel.

### Beispiel 3: Durchbruchskurven an nichtpartikulären, schwachen Anionenaustauscher-Adsorbern mit Polyallylamin-Liganden bei der Beaufschlagung mit Salzsäure

Eine, wie in WO2009/127285 A1 (Beispiel 21) beschrieben hergestellte, mit Polyallylamin modifizierte Membran wurde wie in Beispiel 1 dieser Anmeldung beschrieben in ein Gehäuse eingebaut und verwendet. Folgende Schritte wurden durchgeführt:
1. Spülen des Adsorbers mit 10 ml einer Lösung von 1 mmol/l NaOH in Wasser.
2. Waschen des Adsorbers mit 40 ml Reinstwasser.
3. Beaufschlagung des Adsorbers mit einer 10 mmol/l HCI-Lösung.
4. Aufzeichnen des geförderten Volumens und des pH-Wertes im Ablauf mit Hilfe einer Durchflusszelle für den pH-Wert.

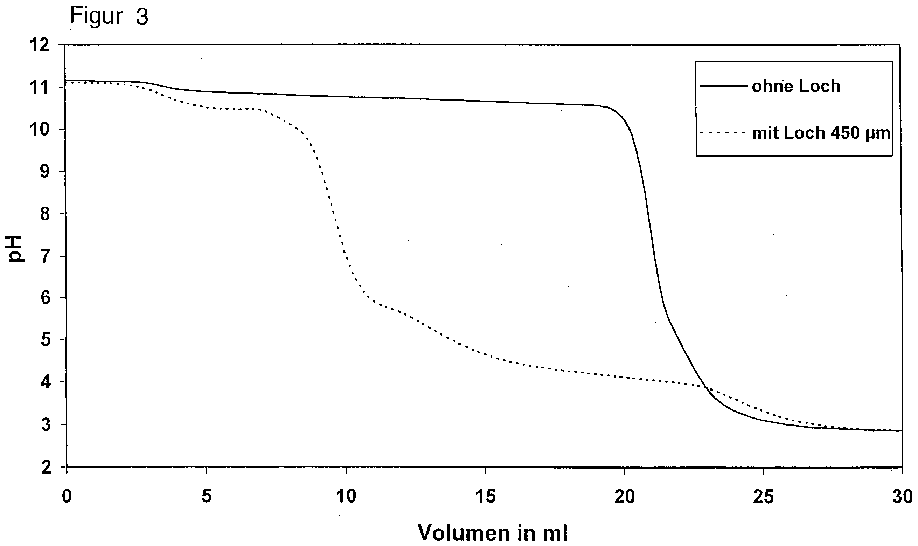

Fig. 3 zeigt die Durchbruchskurve eines 3-lagigen schwachen lonenaustauscher-Adsorberstapels mit Polyallylamin-Liganden, in dem ein künstlicher Defekt (Loch) eingebracht wurde, im Vergleich zu einem intakten Stapel bei der Beaufschlagung mit Salzsäure. Es zeigt sich ein deutlich früherer Durchbruch für den Membranstapel mit Loch gegenüber dem intakten Membranstapel.

### Beispiel 4: Durchbruchskurven an starken Kationenaustauscher-Adsorbern mit Sulfonsäure-Liganden bei der Beaufschlagung mit Natronlauge

Es wurde eine kommerziell erhältliche Membran des Typs Sartobind® S, starker Kationenaustauscher, Bestell-Nr. 94IEXS 42-001, der Fa. Sartorius Stedim Biotech GmbH wie in Beispiel 1 beschrieben in ein Gehäuse eingebaut und verwendet. Folgende Schritte wurden durchgeführt:
1. Spülen des Adsorbers mit 10 ml einer Lösung von 1 mol/l HCl in Wasser.
2. Waschen des Adsorbers mit 40 ml Reinstwasser.
3. Beaufschlagung des Adsorbers mit einer 2 mmol/l NaOH-Lösung.
4. Aufzeichnen des geförderten Volumens und des pH-Wertes im Ablauf mit Hilfe einer Durchflusszelle für den pH-Wert.

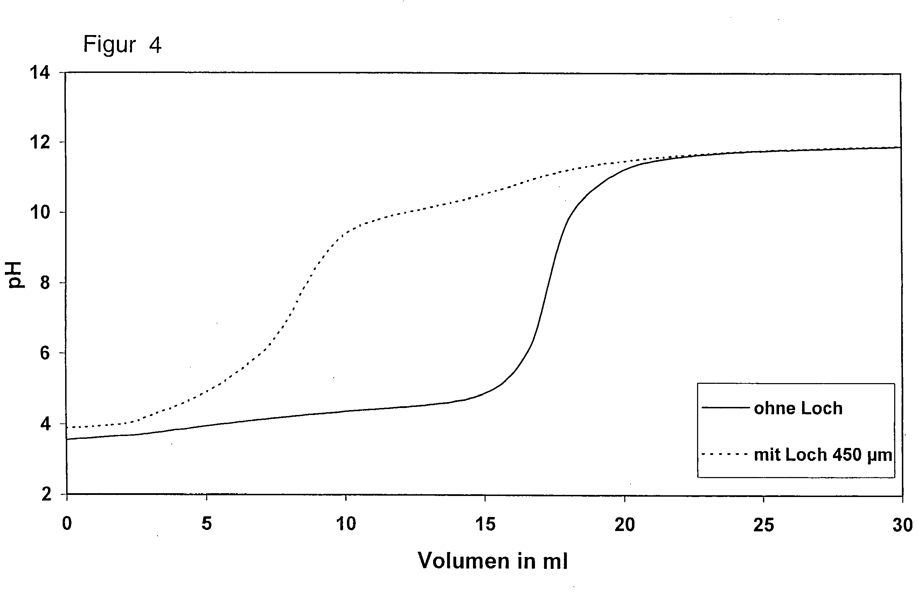

Fig. 4 zeigt die Durchbruchskurve eines 3-lagigen starken Kationenaustauscher-Adsorberstapels mit Sulfonsäure-Liganden, in dem ein künstlicher Defekt (Loch) eingebracht wurde, im Vergleich zu einem intakten Stapel bei der Beaufschlagung mit Natronlauge. Es zeigt sich ein deutlich früherer Durchbruch für den defekten Membranstapel mit Loch gegenüber dem intakten Membranstapel.

## Patentansprüche

1. Verfahren zur Detektion von Fehlstellen und Defekten in einem nichtpartikulären lonenaustauscher-Adsorber mit anionenaustauschenden oder kationenaustauschenden Gruppen, umfassend die Schritte des
a) Beladens des nichtpartikulären Adsorbers mit Lauge im Falle eines Anionenaustauschers bzw. des Beladens des nichtpartikulären Adsorbers mit Säure im Falle eines Kationenaustauschers,
b) Spülens des nichtpartikulären lonenaustauscher-Adsorbers mit Wasser,
c) Beladens des Adsorbers mit einem flüssigen, Ionen enthaltenden Medium unter Detektion der Konzentration der durchgebrochenen Ionen mittels einer ionensensitiven Sonde,
d) Vergleichens des in dem Schritt c) detektierten Konzentrationsprofils mit demjenigen eines nichtpartikulären lonenaustauscher-Adsorbers bekannter Integrität,
wobei im Falle eines nichtpartikulären Anionenaustauscher-Adsorbers das unter c) beschriebene flüssige, Ionen enthaltende Medium eine Säure ist und im Falle eines nichtpartikulären Kationenaustauscher-Adsorbers das unter c) beschriebene flüssige, Ionen enthaltende Medium eine Lauge ist.

2. Verfahren nach Anspruch 1, wobei die ionensensitive Sonde eine pH-Elektrode, ein ionensensitiver Feldeffekt-Transistor oder ein pH-Indikatorfarbstoff ist.

## Claims

1. Method for detecting fault locations and defects in a non-particulate ion-exchanger adsorber with anion-exchanging or cation-exchanging groups, comprising the steps of
a) loading the non-particulate adsorber with alkaline solution in the case of an anion-exchanger or loading the non-particulate adsorber with acid in the case of a cation-exchanger,
b) washing the non-particulate ion-exchanger adsorber with water,
c) loading the adsorber with a liquid ion-containing medium with detection of the concentration of the broken-through ions by means of an ion-sensitive probe and
d) comparing the concentration profile detected in step c) with that of a non-particulate ion-exchanger adsorber of known integrity,
wherein in the case of a non-particulate anion-exchanger adsorber the liquid ion-containing medium described under c) is an acid and in the case of a non-particulate cation-exchanger adsorber the liquid ion-containing medium described under c) is an alkaline solution.

2. Method according to claim 1, wherein the ion-sensitive probe is a pH electrode, an ion-sensitive field effect transistor or a pH indicator dye.

## Revendications

1. Procédé de détection de lacunes et de défauts dans un adsorbeur échangeur d'ions non particulaire ayant des groupes échangeurs d'anions ou échangeurs de cations, le procédé comprenant les étapes suivantes
a) charger l'adsorbeur non particulaire avec un alcali dans le cas d'un échangeur d'anions ou charger l'adsorbeur non particulaire avec un acide dans le cas d'un échangeur cationique,
b) rincer l'adsorbeur échangeur d'ions non particulaire à l'eau,
c) charger l'adsorbeur avec un milieu liquide contenant des ions pour détecter la concentration des ions claqués au moyen d'une sonde sensibles aux ions,
d) comparer le profil de concentration détecté à l'étape c) avec celui d'un adsorbeur échangeur d'ions non particulaire d'intégrité connue,
dans le cas d'un adsorbeur échangeur d'anions non particulaire, le milieu liquide contenant des ions décrit en c) étant un acide et, dans le cas d'un adsorbeur échangeur de cation non particulaire, le milieu liquide contenant des ions décrit en c) étant une solution alcaline.

2. Procédé selon la revendication 1, dans lequel la sonde sensible aux ions est une électrode de pH, un transistor à effet de champ sensible aux ions ou un colorant indicateur de pH.
